# EUROPEAN PATENT SPECIFICATION

(11) **EP 1 337 750 B1**
(45) Date of publication and mention of the grant of the patent: **26.07.2006**
(21) Application number: 01981235.3
(22) Date of filing: 30.10.2001
(51) Int. Cl.: F02K 9/76, F02K 9/08, F42B 15/36

(54) **METHOD AND DEVICE FOR A MULTIPLE STEP ROCKET**
VERFAHREN UND VORRICHTUNG FÜR EINE MEHRSTUFIGE RAKETE
PROCEDE ET DISPOSITIF DESTINES A UNE ROQUETTE A PLUSIEURS ETAGES

(30) Priority: 31.10.2000 SE 0003963
(43) Date of publication of application: 27.08.2003
(73) Proprietor: SAAB AB, 581 88 Linköping (SE)
(72) Inventor: NILSSON, Lars, S-644 31 Torshälla (SE); AX, Lars, S-146 54 Tulling (SE)
(74) Representative: Falk, Bengt
(86) International application number: PCT/SE2001/002381
(87) International publication number: WO 2002/036955

(56) References cited:
- ISR MISSING

## Description

The present invention relates to a method of providing launching of multi-stage rockets intended for missile weapons, and principally those intended to be fired from a launcher and the launcher of which is, when the weapon is fired, to be handled directly by a gunner who, in this connection, has to be located in close proximity to the launcher and must therefore be protected from the hot combustion gases of the rocket engine. The invention also includes the design of the drive function of the rocket concerned, with its various means for the initiation of its rocket engine stages ignited one after another.

In all missile and blowback weapons which are handled directly by a gunner who, when the weapon in question is fired, is located in direct proximity to the firing device, special consideration has to be given to the spread in front of the launching device of the combustion flames and powder gases which are discharged when the projectile contained in the weapon is launched. The gunner must simply not be harmed by the flames or the hot powder gases or, if the projectile is to be guided from then on, be seriously troubled by these.

Several different types of launching charges have previously been used in order, within a launcher, to give a projectile of the type referred to here an adequate initial speed without the gunner who handled the weapon coming to harm on account of the powder gases generated in this connection. Some such weapons have therefore been provided with booster stages in the form of a blowback charge, built into the launching device, with or without damping material, or alternatively with a gas generator arranged firmly in the launching device or a booster rocket engine built into the projectile as for example known from US-A-4 198 896. Irrespective of the type of booster stage selected, this was controlled so that it was able to burn out before the projectile or the rocket had time to leave the launcher. In the event that there was then a requirement for a greater range than that for which this initial impulse could provide energy, a rocket trajectory engine with a long or short burning time was ignited after the projectile had gone a sufficient distance for the gunner no longer to be in the risk zone.

As soon as a requirement for such a rocket trajectory engine arises and the initial impulse of the projectile is provided by a first booster rocket engine, which accompanies the projectile out of the launcher, a decision must also be made with regard to whether the booster rocket engine is to be jettisoned before the rocket trajectory engine is ignited or whether the booster rocket engine is to accompany it as deadweight even after having burnt out. For reasons of performance, a jettisonable booster rocket engine must be considered preferable even though it involves certain mechanical complications in that there must then be a connection, which can be detached on command, between the main projectile and the booster rocket engine, and this connection must also be interlinked with the flight of the projectile in such a manner that it is released at the correct time. A further aspect which then has to be taken into consideration is that, at the time of firing, there may be friendly troops in the firing direction in advance of the firing site. For this reason, it would therefore be particularly inappropriate if the booster rocket engine left the main projectile at such a great speed that it continued to function as an independent projectile which could harm friendly troops after it had left the main projectile.

The present invention concerns a mechanically simple method and arrangement for joining a booster rocket engine together with a trajectory rocket engine, which make it possible, on the one hand, to bring about the requisite interval between the time when the booster rocket engine has burnt out completely and the time or rather the distance from the launching site at which it is desired that the trajectory rocket engine be ignited, and, on the other hand, to eliminate virtually entirely the problem of the jettisoned booster rocket engine possibly forming a free-flying projectile which is hazardous to the environment surrounding the launching site.

In order to prevent the gunner being harmed or troubled by the ignition of a trajectory rocket engine after the rocket projectile has left the launcher, a certain interval is therefore required between the booster stage, irrespective of how this is designed, having had time to burn out before the projectile has left the barrel and the time for the trajectory rocket engine to be ignited. This interval must be very accurately dimensioned because it must be neither too long nor too short.

The present invention can be said then to be intended principally for those rockets of limited size in which an interval is required between the end of burning of a booster rocket engine and the ignition of a second rocket stage in the form of a trajectory rocket engine. The invention is moreover intended above all for use in those rocket projectiles which are fired from launchers intended for the purpose, where the rocket itself and all the drive functions included in it are controlled in all lateral directions until the projectile has completely left the launcher.

Generally, the present invention can therefore be considered to comprise a method and also an arrangement of providing launching of multi-stage rockets of the general type indicated above, providing and designing each preceding (that is to say lying behind in the flying direction of the rocket) rocket engine included in the ignition sequence with a guide part which is directed forwards in the flying direction of the rocket and geometrically adapted to the exhaust nozzle of the following rocket engine in the ignition sequence and which, in the initial position, is fitted into said exhaust nozzle and fixed therein by means adapted thereto. In this connection, said means for fixing the guide part in the nozzle of the following rocket engine in the ignition sequence can consist of a blocking part which is arranged on the opposite side of the narrowest part of the nozzle and can be deformed at great stresses, the resistance of the blocking part to external stresses being defined by selection of material, shape and dimensions so that the already burnt-out preceding rocket engine is freed when the gas pressure in the following rocket engine has reached a preselected gas pressure which at the same time means that the rocket has been able to travel a distance determined by the time delay.

In this connection, the deformation of the blocking part can consist of an elastic or plastic deformation of the same under the action of the gas pressure from the start-up of the following rocket engine in the ignition sequence, or alternatively a deformation of the same by combustion of at least its outer layer brought about by the powder gases from the start-up of said rocket engine. The blocking part can also consist of one or more free-standing springs which hold the two rocket engines following one another together until the pressure on the guide part exceeds the value defined previously for separation to take place between the rocket engines. In order to obtain the desired time interval between two rocket engine starts following one another, an ignition connection is suitably arranged between a preceding rocket engine in the ignition sequence and a following engine, this ignition connection being arranged in such a manner that it is initiated in connection with the end of burning of the first-mentioned engine and moreover, if so desired, includes a preselected time delay before it initiates the start of burning of the following engine.

The invention has been defined in its entirety in the patent claims below and it will now be described in only slightly greater detail in connection with accompanying figures, in which
- Fig. 1: shows a first longitudinal section through a single-use rocket-propelled anti-tank weapon, and
- Fig. 2: shows a second longitudinal section on enlarged scale of the propelling engine parts of the same weapon.

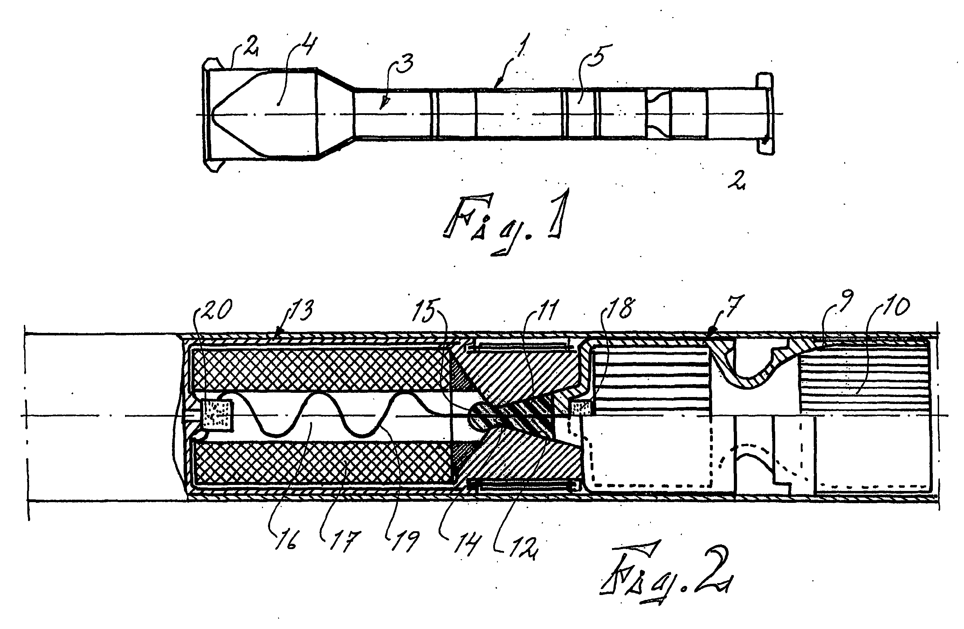

In both figures, reference number 2 designates the launcher included in the weapon 1, while reference number 3 indicates the projectile which can be launched from the launcher 2. The projectile 3 includes a warhead 4, various control, safety and arming functions (not described in greater detail here), four fins 5 which can be folded out after launching (shown only in the retracted position) and also the propelling engine part 6 of the projectile, which is of particular interest here. This comprises a launching rocket engine 7 with a propelling charge 8 and damping material 10 arranged in its exhaust 9. The launching rocket engine 7 is, in its front part in the launching direction of the rocket 3, designed with a front guide part or guide 11 which is adapted to and, in the initial position, inserted into the exhaust nozzle 12 of a second rocket engine, the actual trajectory rocket engine 13. On the inside of the narrowest part 14 of the exhaust nozzle 12, the guide 11 is designed with a thickening or a blocking part 15 which, in the initial position, holds the rocket engines 7 and 13 together. In the embodiment shown in the figure of the arrangement according to the invention, at least the blocking part 15 is made of an elastically or plastically deformable material, which allows the blocking part 15 to resist up to a predetermined internal overpressure in the combustion chamber of the trajectory rocket engine 13, the exhaust and narrowest part 14 of which the blocking part 15 obstructs as long as it is in place. The propellant part of the rocket engine 13 arranged in its combustion chamber 16 has been designated here by reference number 17. Between the two rocket engines 7 and 13, there is an ignition connection in the form of a first ignition charge 18 which is ignited in connection with the propelling charge 8 of the rocket engine 7 starting to burn out, a pyrotechnic ignition connection 19, which can also include a pyrotechnic delay element, and an ignition charge 20 for initiating the propelling charge 16 of the rocket engine 13.

When the weapon 1 is fired, the propelling charge 8 of the booster rocket engine 7 is ignited, and the rocket 3 leaves the launcher 2, and at the same time the damping material 10 performs its function as damping material and by reducing the IR signature of the weapon. The booster rocket engine 7 will have burnt out before the rocket leaves the launcher 2. This is in order that the gunner will not be troubled or harmed by its powder gases or flames. In connection with the propelling charge 8 burning out, the ignition transfer 18, 19, 20 described above is initiated, and, at a predetermined time, the propelling charge 17 of the trajectory rocket engine 13 is subsequently initiated, and then a pressure builds up inside its combustion chamber 16. When this has reached a predetermined point, that is to say after the projectile 3 has travelled a given distance, the loading on the blocking part 15 becomes so high that it is pressed out of the exhaust nozzle 14 of the trajectory rocket engine 13, and at the same time the trajectory rocket engine starts to propel the projectile 3. In connection with the booster rocket 7 being forced to leave the projectile 3, it is also given a speed directed backwards in the flying direction of the projectile 3, which can, by virtue of inter alia dimensioning of the blocking part 15 and the material of the same, be set so that it cancels the speed directed forwards which the rocket engine 7 had initially as a part of the projectile 3.

The result is then that the booster rocket engine. 7 will fall down to the ground without any actual trajectory speed of its own. This must be seen as a great advantage above all when the weapon in question has to be fired over friendly troops.

## Claims

1. Method of providing launching of a multi-stage rocket (3) provided with a number of successively ignitable rocket engines (7, 13) arranged one in front of another in the flying direction of the rocket and joined together detachably with one another, each following rocket engine (13) in the ignition sequence depending, for its ignition, on being initiated in connection with a preceding rocket engine (7) burning out, each rocket being provided with an exhaust nozzle (12), **characterized in** providing each preceding rocket engine (7) included in the ignition sequence with a guide part (11) directed forwards in the flying direction of the rocket, designing each guide part geometrically adapted to the exhaust nozzle (12) of the following rocket engine (13), fitting the guide part in the initial position into said exhaust nozzle (12), providing at least one blocking part (15) which is deformable or capable of elastic recovery and the resistance of which to external stresses is defined by selection of material, shape and dimensions, fixing the guide part in the initial position and freeing the already burnt-out preceding rocket engine (7) when the gas pressure in the following rocket engine (13) has reached a preselected gas pressure acting on the guide part.

2. Method according to Claim 1, **characterized in** designing said blocking part (15) in the form of a plug which is arranged on the opposite side of the narrowest part (14) of the nozzle and can be deformed at great stresses and which blocking part, in the initial position, blocks the exhaust direction of the nozzle and, in the initial position, has a greater diameter than the narrowest part of the nozzle.

3. Method according to Claim 1 or 2, **characterized in** adapting forces which are required to deform the blocking part (15) in each already burnt-out rocket engine (7) so that, at the same time as deforming the same, they give it a speed in the freeing direction which at least in the main cancels the speed the burnt-out rocket engine (7) has in the flying direction of the rocket (3).

4. Method according to Claim 1, 2 or 3, **characterized in** using the end of burning of a preceding rocket engine (7) in the ignition sequence for initiating, with a predetermined delay interval, the engine start of a following rocket engine (13).

5. Method according to any of Claims 1-4, **characterized in** using the gas pressure which builds up in the following rocket engine in connection with it being ignited at the same time as its exhaust nozzle (12) is still blocked by the blocking part (15) of the preceding rocket engine for generating the force which is required in order to deform the blocking part (15) of a burnt-out rocket engine (7) to a sufficiently great degree to separate this rocket engine (7) from a following rocket engine (13).

6. Method according to any of Claims 1-5, **characterized in** effecting the deformation of the blocking part (15) of a preceding rocket engine (7) by way of combustion of the same.

7. Arrangement of rockets for carrying out the method according to any of Claims 1-6 in those multi-stage rockets (3) which are provided with a number of successively ignitable rocket engines (7, 13) arranged one in front of another in the flying direction of the rocket, each following rocket engine (13) in the ignition sequence depending, for its ignition, on being initiated in connection with a preceding engine (7) having burnt out, joining a preceding rocket engine in the ignition sequence to the one immediately following in the ignition sequence, **characterized in that** each preceding rocket engine (7) included in the ignition sequence is attached to the immediately following rocket engine (13) by means of a guide part (11) adapted to the exhaust nozzle (12) of the latter engine and a blocking part (15) which is arranged on the opposite side of the narrowest part (14) of said exhaust nozzle and is deformable in such a manner on ignition of said second rocket engine that said blocking part is capable of passing through the narrowest part (14) of said exhaust nozzle (12) and affords the burnt-out rocket engine (7) the possibility of leaving the rocket.

8. Arrangement according to Claim 7, **characterized in that** the blocking part (15) of each rocket engine concerned is made from a preferably elastically deformable material with a size which causes it to be forced out through the respective exhaust nozzle when the rocket engine, of which it blocks the nozzle, starts to reach its normal working pressure.

9. Arrangement according to Claim 7, **characterized in that** the blocking part (15) of each rocket engine (7) concerned is made from a combustible material which is combusted when the rocket engine (13), of which it blocks the exhaust nozzle (12), is started up.

10. Arrangement according to any of Claims 6-8, **characterized in that** a preceding rocket engine (7) in the ignition sequence is connected in such a manner to the immediately following rocket engine (13) in the ignition sequence that the end of burning of the former means, with a certain delay, that the next rocket engine is started.

## Patentansprüche

1. Verfahren zum Vorsehen des Abschießens einer mehrstufigen Rakete (3) mit einer Anzahl von nacheinander zündbaren Raketentriebwerken (7, 13), die in der Flugrichtung der Rakete hintereinander angeordnet und trennbar miteinander verbunden sind, wobei jedes in der Zündreihenfolge nachfolgende Raketentriebwerk (13) bezüglich seiner Zündung davon abhängt, dass es im Zusammenhang mit dem Ausbrennen eines vorangehenden Raketentriebwerks aktiviert wird, wobei jedes Raketentriebwerk mit einer Ausstoßdüse (12) versehen ist, ***gekennzeichnet durch**:* Ausrüsten jedes in der Zündreihenfolge vorangehenden Raketentriebwerks (7) mit einem Führungsteil (11), das in der Flugrichtung der Rakete nach vorne gerichtet ist, Gestalten jedes Führungsteils in geometrischer Anpassung an die Ausstoßdüse (12) des folgenden Raketentriebwerks (13), Einpassen des Führungsteils in der Ausgangsstellung in die Ausstoßdüse (12), Vorsehen mindestens eines Blockierteils (15), der verformbar oder elastisch rückstellbar ist und dessen Widerstand gegen äußere Kräfte **durch** Wahl des Materials, der Form und der Abmessungen definiert ist, Festlegen des Führungsteils in der Ausgangsstellung und Freigeben des bereits ausgebrannten Raketentriebwerks (7), wenn der Gasdruck in dem nachfolgenden Raketentriebwerk (13) einen vorgegebenen Gasdruck erreicht hat, der auf das Führungsteil einwirkt.

2. Verfahren nach Anspruch 1, ***gekennzeichnet durch*** das Gestalten des Blockierteils (15) in der Form eines Stopfens, der an der dem engsten Teil (14) der Düse gegenüberliegenden Seite angeordnet ist und bei großen Kräften deformiert werden kann, wobei der Blockierteil in der Ausgangsstellung die Ausstoßrichtung der Düse blockiert und in der Ausgangsstellung einen größeren Durchmesser als der engste Teil der Düse hat.

3. Verfahren nach Anspruch 1 oder 2, ***gekennzeichnet durch*** das Anpassen der Kräfte, die zum Deformieren des Blockierteils (15) in jedem bereits ausgebrannten Raketentriebwerk (7) erforderlich sind derart, dass sie gleichzeitig mit der Deformierung des Blockierteils diesem eine Geschwindigkeit in der Freigaberichtung erteilen, die mindestens in der Hauptsache die Geschwindigkeit annulliert, die das ausgebrannte Raketentriebwerk (7) in der Flugrichtung der Rakete (3) hat.

4. Verfahren nach Anspruch 1, 2 oder 3, ***dadurch gekennzeichnet,* dass** das Ende des Abbrennens eines in der Zündreihenfolge vorangehenden Raketentriebwerks (7) dazu verwendet wird, den Triebwerksstart eines folgenden Raketentriebwerks (13) mit einem vorgegebenen Verzögerungsintervall zu aktivieren.

5. Verfahren nach einem der Ansprüche 1 bis 4, ***dadurch gekennzeichnet,* dass** der Gasdruck, der sich in dem folgenden Raketentriebwerk aufbaut im Zusammenhang mit dessen Zündung, während gleichzeitig seine Ausstoßdüse (12) noch von dem Blockierteil (15) des vorangehenden Raketentriebwerks blockiert ist, zum Erzeugen der Kraft benutzt wird, die erforderlich ist, um den Blockierteil (15) eines ausgebrannten Raketentriebwerks (7) um ein ausreichendes Maß zu deformieren, um dieses Raketentriebwerk (7) von einem folgenden Raketentriebwerk (13) zu trennen.

6. Verfahren nach einem der Ansprüche 1 bis 5, ***dadurch gekennzeichnet,* dass** die Verformung des Blockierteils (15) eines vorangehenden Raketentriebwerks (7) durch Verbrennung desselben bewirkt wird.

7. Anordnung von Raketen zum Ausführen des Verfahrens gemäß einem der Ansprüche 1 bis 6 in solchen mehrstufigen Raketen (3), die mit einer Anzahl von nacheinander zündbaren Raketentriebwerken (7, 13) versehen sind, die in Flugrichtung der Rakete hintereinander angeordnet sind, wobei jedes in der Zündreihenfolge nachfolgende Raketentriebwerk (13) von einer Aktivierung abhängt, die erfolgt, wenn ein vorangehendes Triebwerk (7) ausgebrannt ist, wodurch ein in der Zündreihenfolge vorangehendes Raketentriebwerk mit einem unmittelbar folgenden verbunden wird, ***dadurch gekennzeichnet,* dass** jedes in der Zündreihenfolge vorangehende Raketentriebwerk (7) an dem unmittelbar folgenden Raketentriebwerk (13) befestigt ist mittels eines Führungsteils (11), das an die Ausstoßdüse (12) dieses Triebwerks angepasst ist, und einem Blockierteil (15), der an der dem engsten Teil (14) der Ausstoßdüse gegenüberliegenden Seite angeordnet ist und bei Zündung des zweiten Raketentriebwerks derart deformierbar ist, dass der Blockierteil durch den engsten Teil (14) der Ausstoßdüse (14) durchtreten kann und dem ausgebrannten Raketentriebwerk (7) die Möglichkeit gibt, die Rakete zu verlassen.

8. Anordnung nach Anspruch 7, ***dadurch gekennzeichnet,* dass** der Blockierteil (15) jedes betroffenen Raketentriebwerks aus einem vorzugsweise elastisch verformbaren Material besteht, mit einer Abmessung, die bewirkt, dass es durch die jeweilige Ausstoßdüse herausgepresst wird, wenn das Raketentriebwerk, dessen Düse es blockiert, beginnt, seinen normalen Arbeitsdruck zu erreichen.

9. Anordnung nach Anspruch 7, ***dadurch gekennzeichnet,* dass** der Blockierteil (15) jedes betroffenen Raketentriebwerks (7) aus einem verbrennbaren Material besteht, welches verbrannt wird, wenn das Raketentriebwerk (13), dessen Ausstoßdüse (12) es blockiert, hochgefahren wird.

10. Anordnung nach einem der Ansprüche 6 bis 8, ***dadurch gekennzeichnet,* dass** ein in der Zündreihenfolge vorangehendes Raketentriebwerk (7) mit dem in der Zündreihenfolge unmittelbar folgenden Raketentriebwerk (13) derart verbunden ist, dass das Ende des Abtrennens des Ersteren bedeutet, dass mit einer gewissen Verzögerung das nächste Raketentriebwerk gestartet wird.

## Revendications

1. Procédé pour une roquette à plusieurs étages (3) pourvue d'un nombre de moteurs de roquette pouvant être allumés successivement (7, 13) agencés l'un devant l'autre dans la direction de vol de la roquette et joints les uns aux autres de façon détachable, l'allumage de chaque moteur de roquette suivant (13) dans la séquence d'allumage étant amorcé en association à l'extinction d'un moteur de roquette précédent (7), chaque roquette étant conçue avec une tuyère d'échappement (12), **caractérisé en ce qu'**il fournit à chaque moteur de roquette précédent (7) compris dans la séquence d'allumage une partie de guidage (11) qui est dirigée vers l'avant dans la direction de vol de la roquette et adaptée géométriquement à la tuyère d'échappement (12) du moteur de roquette suivant (13) et qui, dans la position initiale, est installée dans ladite tuyère d'échappement (12) et fournit au moins une partie de blocage (15) qui est déformable ou capable de retour élastique et dont la résistance aux contraintes externes est définie par la sélection de matériau, de forme et de dimensions de sorte que le moteur de roquette précédent déjà éteint (7) est libéré lorsque la pression de gaz dans le moteur de roquette suivant (13) a atteint une pression de gaz présélectionnée agissant sur la partie de guidage.

2. Procédé selon la revendication 1, **caractérisé par** la conception de ladite partie de blocage (15) sous forme de bouchon qui est agencé sur le côté opposé de la partie la plus étroite (14) de la tuyère et peut être déformé sous des contraintes importantes et laquelle partie de blocage, dans la position initiale, bloque la direction d'échappement de la tuyère et, dans la position initiale, a un diamètre plus important que la partie la plus étroite de la tuyère.

3. Procédé selon la revendication 1 ou 2, **caractérisé en ce que** les forces qui sont requises pour déformer la partie de blocage (15) dans chaque moteur de roquette déjà éteint (7) sont adaptées de sorte que, en même temps de la déformer, elles lui donnent une vitesse dans la direction de libération qui au moins dans l'ensemble annule la vitesse que le moteur de roquette éteint (7) a dans la direction de vol de la roquette (3).

4. Procédé selon la revendication 1, 2 ou 3, **caractérisé en ce que** la fin de la combustion d'un moteur de roquette précédent (7) dans la séquence d'allumage est utilisée pour amorcer, avec un délai prédéterminé, le démarrage de moteur d'un moteur de roquette suivant (13).

5. Procédé selon l'une quelconque des revendications 1 à 4, **caractérisé par** l'utilisation de la pression de gaz qui s'accumule dans le moteur de roquette suivant en association à son allumage en même temps que sa tuyère d'échappement (12) est toujours bloquée par la partie de blocage (15) du moteur de roquette précédent pour générer la force qui est requise afin de déformer la partie de blocage (15) d'un moteur de roquette éteint (7) dans une mesure suffisamment importante pour séparer ce moteur de roquette (7) d'un moteur de roquette suivant (13).

6. Procédé selon l'une quelconque des revendications 1 à 5, **caractérisé en ce que** la déformation de la partie de blocage (15) d'un moteur de roquette précédent (7) est effectuée par l'intermédiaire de la combustion de ce dernier.

7. Agencement de roquettes pour réaliser le procédé selon l'une quelconque des revendications 1 à 6 dans des roquettes à plusieurs étages (3) qui sont pourvues d'un nombre de moteurs de roquette pouvant être allumés successivement (7, 13) agencés l'un devant l'autre dans la direction de vol de la roquette, l'allumage de chaque moteur de roquette suivant (13) dans la séquence d'allumage étant amorcé en association à l'extinction d'un moteur précédent (7), joignant un moteur de roquette précédent dans la séquence d'allumage à celui suivant immédiatement dans la séquence d'allumage, **caractérisé en ce que** chaque moteur de roquette précédent (7) compris dans la séquence d'allumage est attaché au moteur de roquette suivant immédiatement (13) au moyen d'une partie de guidage (11) adaptée à la tuyère d'échappement (12) de ce dernier moteur et une partie de blocage (15) qui est agencée sur le côté opposé de la partie la plus étroite (14) de ladite tuyère d'échappement et est déformable de manière telle que, lors de l'allumage dudit second moteur de roquette, ladite partie de blocage est capable de passer à travers la partie la plus étroite (14) de ladite tuyère d'échappement (12) et permet au moteur de roquette éteint (7) de quitter la roquette.

8. Agencement selon la revendication 7, **caractérisé en ce que** la partie de blocage (15) de chaque moteur de roquette concerné est faite d'un matériau de préférence déformable de façon élastique avec une taille qui l'oblige à être sorti par force à travers la tuyère d'échappement respective lorsque le moteur de roquette, dont elle bloque la tuyère, commence à atteindre sa pression de service normale.

9. Agencement selon la revendication 7, **caractérisé en ce que** la partie de blocage (15) de chaque moteur de roquette (7) concerné est fait d'un matériau combustible qui est brûlé lorsque le moteur de roquette (13), dont elle bloque la tuyère d'échappement (12), est allumé.

10. Agencement selon l'une quelconque des revendications 6 à 8, **caractérisé en ce qu'**un moteur de roquette précédent (7) dans la séquence d'allumage est relié au moteur de roquette suivant immédiatement (13) dans la séquence d'allumage de manière telle que la fin de la combustion de ce premier moteur signifie, avec un certain délai, que le moteur de roquette suivant est allumé.
